Europäisches Patentamt

European Patent Office

Office européen des brevets

(19)

(11) Veröffentlichungsnummer: **0 364 585**
**A1**

(12) **EUROPÄISCHE PATENTANMELDUNG**
veröffentlicht nach Art. 158 Abs. 3
EPÜ

(21) Anmeldenummer: 88907446.4

(22) Anmeldetag: 28.04.88

(86) Internationale Anmeldenummer:
PCT/SU88/00105

(87) Internationale Veröffentlichungsnummer:
WO 89/10383 (02.11.89 89/26)

(51) Int. Cl.⁵: **C08L 95/00**

(43) Veröffentlichungstag der Anmeldung:
25.04.90 Patentblatt 90/17

(84) Benannte Vertragsstaaten:
**BE DE FR GB IT LU NL SE**

(71) Anmelder: **NAUCHNO-PROIZVODSTVENNOE OBIEDINENIE "DORSTROITEKHNIKA"**
ul. Opanskogo, 37
**Minsk, 220079(SU)**

(72) Erfinder: **PETUKHOV, Igor Nikolaevich**
ul. Vostochnaya, 64-175
**Minsk, 220113(SU)**
Erfinder: **KOZLOV, Gennady Nikolaevich**
pr. imeni gazety "Pravda", 30-260
**Minsk, 220116(SU)**
Erfinder: **TUMASCHIK, Petr Iosifovich**
ul. Belinskogo, 17
**Minsk, 220104(SU)**

(74) Vertreter: **von Füner, Alexander, Dr. et al
Patentanwälte v. Füner, Ebbinghaus, Finck
Mariahilfplatz 2 & 3
D-8000 München 90(DE)**

(54) **BITUMEN-KAUTSCHUKZUSAMMENSETZUNG UND VERFAHREN ZUR HERSTELLUNG.**

(57) Die Erfindung bezieht sich auf die Herstellung von Baustoffen.

Eine Bitumen-Kautschuk-Mischung besteht aus folgenden Komponenten in Masse%:

| | |
|---|---|
| Erdölbitumen | 30,0 bis 89 |
| zerkleinerter vulkanisierter Kautschuk | 10,0 bis 60 |

als Weichmacher Nebenprodukt, welches bei der Herstellung von Zellstoff nach der Sulfatverfahren anfällt, oder Verseifungsrückstand, welcher durch Rektifikation von Tallöl anfällt 0,5 bis 5

als Vernetzungsmittel Nebenprodukt, welches bei der Herstellung von Kaprolaktam aus Benzol anfällt und 11 bis 12% Natriumsalz der Adipinsäure enthält 0,5 bis 5

Das Verfahren zur Herstellung der Bitumen-Kautschuk-Mischung sieht Vermischen von Erdölbitumen und zerkleinertem vulkanisiertem Kautschuk, Erhitzen des Gemisches, Halten desselben bei einer zwischen 220 und 250°C liegenden Temperatur, Zusetzen von Weichmacher und Vernetzungsmittel

zum gewonnenen Gemisch und Herstellung des Endprodukts vor.

EPAA-38637.3

BITUMEN-KAUTSCHUK-MISCHUNG UND VERFAHREN
ZUR HERSTELLUNG DERSELBEN

Gebiet der Technik

Die Erfindung bezieht sich auf die Herstellung von Baustoffen für Isolation und insbesondere auf eine Bitumen-Kautschuk-Mischung und ein Verfahren zur Herstellung derselben.

Zugrundeliegender Stand der Technik

Zum Schutz von auf Stoss zu verbindenden Bauwerken gegen vorzeitige Zerstörung durch Einwirkung von Wasser und Klima- und Witterungsbedingungen ist ihre Sperrung notwendig. Die Isolierstoffe müssen dabei ihre Fähigkeite Verformungen, gekennzeichnet durch relative Grenzdehnung des Werkstoffs ohne dessen Bruch, aufzunehmen, Elastizität, eine hohe Erweichungstemperatur, hohe Zug- und Haftfestigkeit aufweisen.

Als angegebene Baustoffe werden in der Weltbaupraxis Mischungen auf der Basis von Erdölbitumen und Elasten, insbesondere Kautschuken weitgehend verwendet.

Bekannt ist eine Bitumen-Kautschuk-Mischung, die aus Erdölbitumen, zerkleinertem vulkanisiertem Kautschuk und Weichmacher bei folgendem Mischungsverhältnis von Ausgangskomponenten in Masse%

| | |
|---|---|
| Erdölbitumen | 81 bis 90 |
| zerkleinerter vulkanisierter Kautschuk | 5 bis 12 |
| Weichmacher | 5 bis 7 |

besteht (herausgegeben von W.G.Mikulski und O.L.Figowski. Handbuch für Kleber und Klebemassen im Bauwesen, I984, Verlag "Stroiisdat" (Moskau), S. 152. V.G.Mikulsky i O.L.Figovsky. Spravochnik po kleyam i kleyaschim mastikam v stroitelstve, I984, Verlag "Stroiizdat" (Moskau), S. 152).

Diese Mischung enthält als Weichmacher bei der Pyrolyse von Erdölrohstoff anfallende flüssige Produkte, bei denen 60 bis 90% aromatische Kohlenwasserstoffe betragen.

Man erhält die Mischung durch Erhitzen von Erdölbitumen auf eine Temperatur von 180°C, anschliessendes Zusetzen des Weichmachers und des zerkleinerten vulkanisierten Kautschuks zu Bitumen und Umrühren des Gemisches bis zur Herstellung des Endprodukts.

Die nach diesem Verfahren hergestellte Mischung hat eine zwischen 50 und 100% liegende relative Grenzdehnung, ungenügend hohe Haftfestigkeit gegenüber Oberflächen verschiedener Werkstoffe (0,3 bis 0,5 MPa) sowie eine unzureichend hohe Elastizität (5 bis 10% der Gesamtverformungsgrösse).

Bekannt ist ferner eine Mischung, die aus zerkleinertem vulkanisiertem Kautschuk und Erdölbitumen besteht, wobei das Bitumen als Weichmacher einen Extrakt, hergestellt durch Solventraffination von Mineralöl, oder eine schwere bei der destruktiven Verarbeitung von Petroleum angefallene Fraktion oder ein Steinkohlenteerdestillat oder ein bei der Herstellung von Bitumen gewonnenes Zwischenprodukt bei folgendem Mischungsverhältnis von Ausgangskomponenten in Masse%

| | |
|---|---|
| zerkleinerter vulkanisierter Kautschuk | 1 bis 50 |
| Erdölbitumen mit Weichmacher | 50 bis 99 |

enthält (GB, C, 1539116).

Das Verfahren zur Herstellung dieser Mischung besteht darin, dass man den zerkleinerten vulkanisierten Kautschuk in Bitumen mit Weichmacher thermisch bei einer Temperatur von 220 bis 380°C zerlegt und hiernach das Endprodukt erhält.

Dieses Verfahren ist jedoch energieaufwendig und explosionsgefährlich, weil es bei der thermischen Zersetzung von zerkleinertem vulkanisiertem Kautschuk bei einer Temperatur von 250°C zur Bildung explosions- und brandgefährlicher Produkte kommt, bei der Durchführung dieses Verfahrens sind also Sondereinrichtungen erforderlich, die die ungefährlichen Betriebsbedingungen sichern.

Diese Verfahren macht es ebenfalls unmöglich, eine Mischung mit hoher Erweichungstemperatur, Elastizität und relativer Grenzdehnung herzustellen.

So weist zum Beispiel die nach diesem Verfahren hergestellte Mischung eine Erweichungstemperatur von 61 bis 65°C, Elastizität von 10 bis 20% der Gesamtverformungsgrösse und relative Grenzdehnung von 166 bis 200% auf.

Bekannt ist auch eine Mischung, die aus Erdölbitumen, zerkleinertem vulkanisiertem Kautschuk, Weichmacher und Vernetzungsmittel besteht. Als Weichmacher und Vernetzungsmittel enthält sie Tallpech bzw. Asbest bei folgendem Mischungsverhältnis von Ausgangskomponenten in Masse%:

| | |
|---|---|
| Erdölbitumen | 20 bis 70 |
| zerkleinerter vulkanisierter Kautschuk | 10 bis 50 |
| Tallpech | 1 bis 24 |
| Asbest | 5 bis 24 |

(SU, A, 487101).

Man erhält diese Mischung durch Vermischen und Erhitzen von Erdölbitumen, zerkleinertem vulkanisiertem Kautschuk und Weichmacher auf eine Temperatur von 175 bis 185°C, anschliessendes Zusetzen des Vernetzungsmittels zum erhaltenen Gemisch und Herstellung des Endprodukts.

Das angegebene Verfahren gestattet nicht, eine Mischung mit hoher relativer Grenzdehnung, Haftfestigkeit, Elastizität, Erweichungstemperatur und Zugfestigkeit herzustellen.

Bei der nach diesem Verfahren hergestellten Mischung beträgt die relative Grenzdehnung 96 bis 230', die Haftfestigkeit an Beton 0,08 bis 0,49 MPa, Erweichungstemperatur 69 bis 81°C und Zugfestigkeit 0,4 bis 0,57 MPa.

Offenbarung der Erfindung

Der Erfindung liegt die Aufgabe zugrunde, durch qualitative Änderung von dazu gehörenden Ausgangskomponenten und Änderung des Mengenverhältnisses derselben nach einer vereinfachten Technologie eine Bitumen-Kautschuk-Mischung herzustellen, welche eine hohe relative Grensdehnung, Haftfestigkeit, Erweichungstemperatur, Elastizität und Zugfestigkeit aufweist.

Die Aufgabe ist dadurch gelöst worden, dass die erfindungsgemässe Bitumen-Kautschuk-Mischung, welche aus Erdölbitumen, zerkleinertem vulkanisiertem Kautschuk, dessen Teilchengrösse weniger als 5 mm beträgt, Weichmacher und Vernetzungsmittel besteht, erfindungsgemäss als Weichmacher Nebenprodukt, welches bei der Herstellung von Zellstoff aus Nadelholz nach dem Sulfatverfahren durch Absetzen der Kochlauge anfällt und 45 bis 55% Gemisch aus Natriumsalzen von Harz- und Fettsäuren enthält, oder Verseifungsrückstand, welcher durch Vakuumrektifikation von Tallöl nach der Entfernung des Tallkolophoniums und der Fettsäurefraktion anfällt und 20 bis 35% Gemisch aus Natriumsalzen von Harz- und Fettsäuren enthält, und als Vernetzungsmittel ein Nebenprodukt, welches bei der Herstellung von Kaprolaktam aus Benzol auf der Stufe der Gewinnung der Adipinsäure aus Zyklohexanon anfällt und 11 bis 22% Natriumsalz der Adipinsäure enthält, bei folgendem Mischungsverhältnis von Ausgangskomponenten in Masse% enthält:

| | |
|---|---:|
| Erdölbitumen | 30,0 bis 89 |
| zerkleinerter vulkanisierter Kautschuk, dessen Teilchengrösse unter 5 mm liegt | 10,0 bis 60 |
| Nebenprodukt, welches bei der Herstellung von Zellstoff aus Nadelholz nach dem Sulfatverfahren durch Absetzen der Kochlauge anfällt und 45 bis 55% Gemisch aus Natriumsalzen von Harz- und Fettsäuren enthält, oder Verseifungsrückstand, welcher durch Vakuumrektifikation von Tallöl nach der Entfernung des Tallkolophoniums und der Fettsäurefraktion anfällt und 20 bis 35% Gemisch aus Natriumsalzen von Harz- und Fettsäuren enthält | 0,5 bis 5 |
| Nebenprodukt, welches bei der Herstellung von Kaprolaktam aus Benzol auf der Stufe der Gewinnung der Adipinsäure aus Zyklohexanon anfällt und 11 bis 22% Natriumsatz der Adipinsäure enthält | 0,5 bis 5. |

Die erfindungsgemässe Bitumen-Kautschuk-Mischung hat hohe Kennwerte der relativen Grenzdehnung, Haftfestigkeit an Beton, Erweichungstemperatur, Elastizität und Zugfestigkeit.

Die erfindungsgemässe Bitumen-Kautschuk-Mischung weist ausserdem eine geringe Volumenverringerung beim Abkühlen auf, lässt sich zu Granalien oder Briketten von unterschiedlicher Grösse pressen und klebt nach der Behandlung mit einem antiadhäsiven Mittel unter Einwirkung von direkten Sonnenstrahlen eine lange Zeit nicht zusammen.

Dies macht es möglich, die erfindungsgemässe Mischung zum Vermeiden der vorzeitigen Zerstörung von auf Stoss zu verbindenden Bauwerken unter Einwirkung von Wasser und Klima- und Witterungsbedingungen zu verwenden.

Der Gegenstand der Erfindung ist nach ein Verfahren zur Herstellung der erfindungsgemässen Bitumen-Kautschuk-Mischung, welches Vermischen und Erhitzen von Erdölbitumen, zerkleinertem vulkanisiertem Kautschuk, dessen Teilchengrösse weniger als 5 mm beträgt, und Weichmacher auf eine 175°C übersteigende Temperatur, anschliessendes Zusetzen eines Vernetzungsmittels zum erhaltenen Gemisch und Herstellung des Endprodukts vorsieht, bei dem man erfindungsgemäss das Erdölbitumen und den zerkleinerten vulkanisierten Kautschuk, dessen Teilchengrösse weniger als 5 mm beträgt, zuerst vermischt , das Gemisch aus dem genannten Bitumen und Kautschuk erhitzt und bei einer zwischen 220 und 250°C liegenden Temperatur hält, wonach dem gewonnenen Gemisch Weichmacher und Vernetzungsmittel zugegeben werden.

Die vorgeschlagene Aufeinanderfolge der Arbeitsgänge und die vorgeschlagenen Betriebsbedingungen des erfindungsgemässen Verfahrens zur Herstellung der angegebenen Bitumen-Kautschuk-Mischung bewirken den teilweisen Abbau von zerkleinertem vulkanisiertem Kautschuk, dessen Teilchengrösse weniger als 5 mm beträgt, im Medium von Erdölbitumen, das Verhindern der Entzündung des Gemisches sowie die maximale Erhaltung der Elastizität von zerkleinertem vulkanisiertem Kautschuk durch Zerstörung nur der am wenigsten festen Bindungen, die bei diesem Kautschuk vorliegen, und machen es möglich, ohne bedeutenden Arbeits- und Energieaufwand nach der kontinuierlichen Technologie mit Hilfe von einfachen technologischen Einrichtungen die angegebene Bitumen-Kautschuk-Mischung mit hohen Werten der Betriebseigenschaften herzustellen.

Das Zusetzen eines Weichmachers zum Gemisch aus dem angegebenen Bitumen und Kautschuk nach dem Halten dieses Gemisches bei einer zwischen 220 und 250°C liegenden Temperatur sichert die Erhaltung der weichmachenden Eigenschaften des Weichmachers und das Schaffen der Bedingungen für die wirksame Weichmachung von Kautschuk.

Die optimale Haltedauer des Gemisches aus Erdölbitumen und zerkleinertem vulkanisiertem Kautschuk, dessen Teilchengrösse weniger als 5 mm beträgt, bei einer zwischen 220 und 250°C liegenden Temperatur beträgt dabei 1,5 bis 3,5 Stunden, weil die Bitumen-Kautschuk-Mischung in diesem Fall die höchsten Werte der angegebenen Betriebseigenschaften aufweist.

Vorteilhaft ist ein Vernetzungsmittel dem auf eine zwischen 40 und 70°C liegende Temperatur abgekühlten Gemisch aus Erdölbitumen, zerkleinertem vulkanisiertem Kautschuk, dessen Teilchengrösse weniger als 5 mm beträgt, und Weichmacher zuzusetzen, weil dadurch eine Bitumen-Kautschuk-Mischung mit solchen höheren Betriebseigenschaften wie Erweichungstemperatur, relative Grenzdehnung, Haftfestigkeit und Zugfestigkeit durch minimale Zerstörung der festeren Bindungen im Aufbau von zerkleinertem vulkanisiertem Kautschuk hergestellt werden kann.

Beste Ausführungsform der Erfindung

Die beste Ausführungsform des Verhältnisses von Bestandteilen der erfindungsgemässen Bitumen-Kautschuk-Mischung ermöglicht die Erhöhung der angegebenen Betriebseigenschaften von Bitumen-Kautschuk-Mischungen.

EP 0 364 585 A1

Die Zugabe eines Nebenprodukts zur erfindungsgemässen Mischung, welches bei der Herstellung von Zellstoff aus Nadelholz nach dem Sulfatverfahren durch Absetzen der Kochlauge anfällt und 45 bis 55% Gemisch aus Natriumsalzen von Harz- und Fettsäuren enthält, oder eines Verseifungsrückstands, welcher bei der Vakuumrektifikation des Tallöls nach der Entfernung des Tallkolophoniums und der Fettsäurefraktion anfällt und 20 bis 35% Gemisch aus Natriumsalzen von Harz- und Fettsäuren enthält, als Weichmacher in einer unter 0,5 Masse% liegenden Menge beeinflusst unbedeutend die Weichmachung von zerkleinertem vulkanisiertem Kautschuk und verschlechtert die relative Grenzdehnung und die Haftfestigkeit der Mischung praktisch nicht. Durch Zusetzen des angegebenen Weichmachers in einer 5% Masse% übersteigenden Menge wird die Plastizität der Mischung stark erhöht, ihre Erweichungstemperatur und Zugfestigkeit herabgesetzt.

Die Zugabe eines Nebenprodukts zur erfindungsgemässen Mischung, welches bei der Herstellung von Kaprolaktam aus Benzol auf der Stufe der Gewinnung der Adipinsäure aus Zyklohexanon anfällt und 11 bis 22% Natriumsalz der Adipinsäure enthält, in einer 5 Masse% übersteigenden Menge führt neben Steigerung der Erweichungstemperatur der Mischung, der Elastizität der angegebenen Mischung und Zugfestigkeit derselben zur Herabsetzung der relativen Grenzdehnung der angegebenen Mischung, während die unter 0,5 Masse% liegende Menge eine wesentliche Erhöhung der Erweichungstemperatur, Haftfestigkeit und Zugfestigkeit der Mischung nicht sichert.

Das Verfahren zur Herstellung einer Bitumen-Kautschuk-Mischung wird wie folgt durchgeführt.

In einem Reaktor vermischt man Erdölbitumen und zerkleinerten vulkanisierten Kautschuk, dessen Teilchengrösse weniger als 5 mm beträgt, und erhitzt auf eine zwischen 220 und 250°C liegende Temperatur.

Bei einer unter 220°C liegenden Temperatur werden keine Bedingungen zum wirksamen Abbau des angegebenen vulkanisierten Kautschuks erzeugt, und bei einer 250°C übersteigenden Temperatur kommt es zur Bildung von explosions- und brandgefährlichen Produkten, wobei die höchstfesten Bindungen im Kautschuk zerstört werden.

Dem erhitzten und bei einer Temperatur von 220 bis 250°C gehaltenen Gemisch aus dem angegebenen Bitumen und Kautschuk setzt man Weichmacher und Vernetzungsmittel zu und erhält das Endprodukt.

Als Weichmacher dient ein Nebenprodukt, welches bei der Herstellung von Zellstoff aus Nadelholz nach dem Sulfatverfahren durch Absetzen der Kochlauge anfällt und 45 bis 55% Gemisch aus Natriumsalzen von Harz- und Fettsäuren enthält, oder ein Verseifungsrückstand, welcher durch Vakuumrektifikation des Tallöls nach der Entfernung des Tallkolophoniums und der Fettsäurefraktion anfällt und 20 bis 35% Gemisch aus Natriumsalzen von Harz- und Fettsäuren enthält.

Als Vernetzungsmittel dient ein Nebenprodukt, welches bei der Herstellung von Kaprolaktam aus Benzol auf der Stufe der Gewinnung der Adipinsäure aus Zyklohexanon anfällt und 11 bis 22% Natriumsalz der Adipinsäure enthält.

Bei der Zugabe des Weichmachers und des Vernetzungsmittels zum angegebenen Gemisch vor Erhitzen und Halten desselben auf eine zwischen 220 und 250°C liegende Temperatur kommt es zur Zersetzung des angegebenen Weichmachers und Vernetzungsmittels.

Die optimale Haltedauer des Gemisches des angegebenen Bitumens und Kautschuks bei einer Temperatur von 220 bis 250°C beträgt dabei 1,5 bis 3,5 Stunden, weil die Bitumen-Kautschuk-Mischung in diesem Fall die maximalen Werte der angegebenen Betriebseigenschaften besitzt.

Vorteilhaft ist das Vernetzungsmittel dem auf eine zwischen 40 und 70°C liegende Temperatur abgekühlten Gemisch aus dem genannten Bitumen, Kautschuk und Weichmacher zuzusetzen, weil dadurch die Bitumen-Kautschuk-Mischung mit höheren Werten der Erweichungstemperatur, der relativen Grenzdehnung, der Haft- und Zugfestigkeit durch minimale Zerstörung festerer Bindungen im Aufbau des Kautschuks hergestellt werden kann.

Zum besseren Verstehen der vorliegenden Erfindung werden folgende Beispiele angeführt.

Beispiel 1

Bitumen-Kautschuk-Mischung, die aus folgenden Ausgangskomponenten in Masse% besteht:

Erdölbitumen mit Viskosität von $2 \cdot 10^5$ P    30

zerkleinerter vulkanisierter Kautschuk (Teilchengrösse beträgt weniger als 5 mm)    60

als Weichmacher Nebenprodukt, welches bei der Herstellung von Zellstoff aus Nadelholz nach dem Sulfatverfahren durch Absetzen der Kochlauge anfällt und 55% Gemisch der Natriumsalze von Harz- und Fettsäuren enthält    5

als Vernetzungsmittel Nebenprodukt, welches bei der Herstellung von Kaprolaktam aus Benzol auf der Stufe der Gewinnung der Adipinsäure aus Zykloheksanon anfällt und 11% Natriumsalz der Adipinsäure enthält    5

Die erfindungsgemässe Mischung wird wie folgt hergestellt. In einen ölbeheizten Reaktor, versehen mit Rührwerk und Thermometer, bringt man 900 g Erdölbitumen mit einer Viskosität von $2 \cdot 10^5$ P (30 Masse% der Gesamtmasse der Mischung) und 1800 g zerkleinerten vulkanisierten Kautschuk, der durch Brechen von verschliesenen   Reifen hergestellt ist und eine Teilchengrösse von weniger als 5 mm hat (60 Masse% der Gesamtmasse der Mischung) ein, vermischt sie, erhitzt auf eine Temperatur von 250°C und hält innerhalb von 3,5 Stunden, setzt danach dem Gemisch als Weichmacher ein Nebenprodukt, welches bei der Herstellung von Zellstoff aus Nadelholz nach dem Sulfatverfahren durch Absetzen der Kochlauge anfällt und 55% Gemisch aus Natriumsalzen von Harz- und Fettsäuren enthält, in einer Menge von 150 g (5 Masse%, bezogen auf die Gesamtmasse der Mischung) zu, kühlt das gewonnene Gemisch auf eine Temperatur von 60°C ab und gibt darin als Vernetzungsmittel ein Nebenprodukt, welches bei der Herstellung von Kaprolaktam aus Benzol auf der Stufe der Gewinnung der Adipinsäure aus Zyklohexanon anfällt und 11% Natriumsalz der Adipinsäure enthält, in einer Menge von 150 g (5 Masse%, bezogen auf die Gesamtmasse der Mischung) zu, wobei die Dichte desselben bei 20°C 11,8 g/cm$^3$, der Trockenrückstand 38% und pH-Wert 11 betragen.

Das gewonnene  Gemisch wird bis zum Erzielen eines Endproduktes umgerührt.

Aus der hergestellten Bitumen-Kautschuk-Mischung wurden Prüfkörper hergestellt und auf relative Grenzdehnung, Haftfestigkeit an Beton, Elastizität, Erweichungstemperatur und Zugfestigkeit geprüft.

Die Prüfergebnisse sind in der nachstehenden Tabelle angegeben.

Beispiel 2

Bitumen-Kautschuk-Mischung, die aus folgenden Ausgangskomponenten in Masse% besteht:

Erdölbitumen mit Viskosität von
0,5 · 10$^6$ P                                          59,5

zerkleinerter vulkanisierter Kautschuk
(Teilchengrösse beträgt weniger als
5 mm)                                                  35,0
als Weichmacher das angegebene Nebenprodukt, welches bei der Herstellung
von Zellstoff anfällt und 45,5 Gemisch
aus Natriumsalzen von Harz- und
Fettsäuren enthält                                      2,75
das angegebene Vernetzungsmittel,
welches 22' Natriumsalz der Adipinsäure enthält                                          2,75
Die Herstellung und die Prüfungen der Bitumen-
Kautschuk-Mischung erfolgen analog zu Beispiel 1.
Die Prüfergebnisse sind in der nachstehenden
Tabelle angegeben.

Beispiel 3

Bituken-Kautschuk-Mischung, die aus folgenden
Ausgangskomponenten in Masse% besteht:
Erdölbitumen mit einer Viskozität
von 0,5 · 10$^6$ P                                      89
zerkleinerter vulkanisierter Kautschuk
(Teilchengrösse beträgt weniger als
0,5 mm)                                                10,0
als Weichmacher das angegebene Nebenprodukt, welches bei der Herstellung
von Zellstoff anfällt und 50% Gemisch
aus Netriumsalzen von Harz- und Fettsäuren enthält                                          0,5
das angegebene Vernetzungsmittel,
welches 15% Natriumsalz der Adipinsäure enthält                                           0,5
Die Herstellung und die Prüfungen der Bitumen-
Kautschuk-Mischung erfolgen analog zu Beispiel 1.
Die Prüfergebnisse sind in der nachstehenden
Tabelle angegeben.

Beispiel 4

Bitumen-Kautschuk-Mischung, die aus folgenden
Ausgangskomponenten in Masse besteht:

| | |
|---|---|
| Erdölbitumen mit einer Viskosität von $1,1 \cdot 10^6$ P | 47 |
| zerkleinerter vulkanisierter Kautschuk (Teilchengrösse beträgt weniger als 5 mm) | 47 |
| als Weichmacher Verseifungsrückstand, welcher durch Vakuumrektifikation des Tallöls nach der Entfernung des Tall- kolophoniums und der Fettsäurefrak- tion anfällt und 20 % Gemisch aus Natriumsalzen von Harz- und Fettsäuren enthält | 3 |
| das angegebene Vernetzungsmittel, welches 17 % Natriumsalz der Adipin- säure enthält | 3 |

Die Herstellung und die Prüfungen der Bitumen-
Kautschuk-Mischung erfolgen analog zu Beispiel 1.

Die Prüfergebnisse der Mischung sind in der
nachstehenden Mischung angegeben.

Beispiel 5

Bitumen-Kautschuk-Mischung, die aus folgenden
Ausgangskomponenten in Masse % besteht:

| | |
|---|---|
| Erdölbitumen mit einer Viskosität von $3 \cdot 10^6$ P | 47 |
| zerkleinerter vulkanisierter Kautschuk (Teilchengrösse beträgt weniger als 5 mm) | 47 |
| als Weichmacher das angegebene Neben- produkt, welches bei der Herstellung von Zellstoff anfällt und 50 % Gemisch aus Natriumsalzen von Harz- und Fettsäuren enthält | 3 |

das angegebene Vernetzungsmittel,
welches 20% Natriumsalz der Adipinsäure enthält 3

Die Herstellung und die Prüfungen der Bitumen-
Kautschuk-Mischung erfolgen analog zu Beispiel 1.

Die Prüfergebnisse der Mischung sind in der nachstehenden Tabelle angegeben.

Beispiel 6

Bitumen-Kautschuk-Mischung, die aus folgenden
Asugangskomponenten in Masse% besteht:
Erdölbitumen mit einer Viskosität
von $3 \cdot 10^6$ P 47
zerkleinerter vulkanisierter Kautschuk
(Teilchengrösse beträgt weniger als
5 mm) 47
als Weichmacher der angegebene Verseifungsrückstand, welcher 35% Gemisch
aus Natriumsalzen von Harz- und Fettsäuren enthält 4
das angegebene Vernetzungsmittel,
welches 22% Natriumsalz der Adipinsäure enthält 2

Die Herstellung und die Prüfungen der Bitumen-
Kautschuk-Mischung erfolgen analog zu Beispiel 1.

Die Prüfergebnisse der Mischung sind in der
nachstehenden Tabelle angegeben.

Beispiel 7

Bitumen-Kautschuk-Mischung , die aus folgenden
Ausgangskomponenten in Masse% besteht:
Erdölbitumen mit einer Viskosität
von $1,1 \cdot 10^6$ P 47
zerkleinerter vulkanisierter Kautschuk
(Teilchengrösse beträgt weniger als
5 mm) 47

als Weichmacher das angegebene Nebenprodukt, welches bei der Herstellung
von Zellstoff anfällt und 52% Gemisch
aus Natriumsalzen von Harz- und
Fettsäuren enthält                                    0,4
das angegebene Vernetzungsmittel,
welches 20% Natriumsalz der Adipinsäure enthält                                         5,6

Die Herstellung und die Prüfungen der Bitumen-
Kautschuk-Mischung erfolgen analog zu Beispiel 1.

Die Prüfergebnisse der Mischung sind in der
nachstehenden Tabelle angegeben.

Beispiel 8

Bitumen-Kautschuk-Mischung, die aus folgenden
Ausgangskomponenten in Masse, besteht:

Erdölbitumen mit einer Viskosität
von 1,1 · $10^6$ P                                    47
zerkleinerter vulkanisierter Kautschuk
(Teilchengrösse beträgt weniger
als 5 mm)                                             47
als Weichmacher der angegebene
Verseifungsrückstand, welcher
25% Gemisch aus Natriumsalzen von
Harz- und Fettsäuren enthält                          5,6
das angegebene Vernetzungsmittel,
welches 17% Natriumsalz der Adipinsäure enthält                                         0,4

Beispiel 9

In einen ölbeheizten Reaktor, versehen mit einem
Rührwerk und Thermometer, bringt man 1410 g (47 Masse
%, bezogen auf die Gesamtmasse der Mischung) Erdölbitumen mit einer Viskosität von 2 · $10^5$ P bei einer
Temperatur von 25°C, welches auf eine Temperatur von
220°C erhitzt ist, und 1410 g (47 Masse%, bezogen auf
die Gesamtmasse der Mischung) zerkleinerten vulkanisierten Kautschuk, der durch Brechen von verschlissenen Reifen hergestellt ist und eine Teilchengrösse von weniger als 5 mm hat, ein, vermischt sie, erhitzt auf eine Temperatur von 220°C und hält innerhalb von 3,5 Stunden. Man setzt danach 90 g (3 Masse%, bezogen auf die Gesamtmasse der Mischung) des in Beispiel 1 angegebenen Weichmachers und 90 g (3 Masse%, bezogen auf die Gesamtmasse der Mischung) des angegebenen Vernetzungsmittels zu, welches 22% Natriumsalz der Adipinsäure enthält.

Das gewonnene Gemisch wird so lange umgerührt, bis das Endprodukt hergestellt wird.

Aus der nach dem erfindungsgemässen Verfahren hergestellten Bitumen-Kautschuk-Mischung wurden Prüfkörper hergestellt und auf relative Grenzdehnung, Haftfestigkeit an Beton, Erweichungstemperatur, Elastizität und Zugfestigkeit geprüft.

Die Prüfergebnisse sind in der nachstehenden Tabelle angegeben.

Beispiel 10

Die Zusammensetzung der Bitumen-Kautschuk-Mi - schung, ihre Herstellung und Prüfungen ähneln denen in Beispiel 9. Das Gemisch aus Erdölbitumen und zerkleinertem vulkanisiertem Kautschuk wird dabei auf eine Temperatur von 235°C erhitzt und bei dieser Temperatur innerhalb von 3,5 Stunden gehalten.

Die Prüfergebnisse der Mischung sind in der nachstehenden Tabelle angegeben.

Beispiel 11

Die Zusammensetzung der Bitumen-Kautschuk-Mi - schung, ihre Herstellung und Prüfungen ähneln denen in Beispiel 9. Das Gemisch aus Erdölbitumen und zerkleinertem Kautschuk wird dabei auf eine Temperatur von 250°C erhitzt und bei dieser Temperatur innerhalb von 3,5 Stunden gehalten.

Die Prüfergebnisse sind in der nachstehenden Tabelle angegeben.

Beispiel 12

Die Zusammensetzung der Bitumen-Kautschuk-Mi - schung, ihre Herstellung und Prüfungen ähneln denen in Beispiel 9. Das Gemisch aus Erdölbitumen und zerkleinertem vulkanisiertem Kautschuk wird dabei auf eine Temperatur von 235°C erhitzt und innerhalb von 2,5 Stunden gehalten.

Die Prüfergebnisse sind in der nachstehenden Tabelle angegeben.

Beispiel 13

Die Zusammensetzung der Bitumen-Kautschuk- Mischung, ihre Herstellung und Prüfungen ähneln denen in Beispiel 9. Das Gemisch aus Erdölbitumen und zerkleinertem vulkanisiertem Kautschuk wird dabei auf eine Temperatur von 235°C erhitzt und innerhalb von 1,3 Stunden gehalten.

Das Prüfergebnisse sind in der nachstehenden Tabelle angegeben.

Beispiel 14

Die Zusammensetzung der Bitumen-Kautschuk- Mischung, ihre Herstellung und Prüfungen ähneln denen in Beispiel 9. Das Gemisch aus Erdölbitumen und zerkleinertem vulkanisiertem Kautschuk erhitzt man dabei auf eine Temperatur von 250°C, hält innerhalb von 3,5 Stunden, setzt den Weichmacher zu und kühlt das Gemisch auf eine Temperatur von 70°C ab, wonach man das Vernetzungsmittel zugibt. Die Prüfergebnisse sind in der nachstehenden Tabelle angegeben.

Beispiel 15

Die Zusammensetzung der Bitumen-Kautschuk-Mischung, ihre Herstellung und Prüfungen ähneln denen in Beispiel 9. Das Gemisch aus Erdölbitumen und zerkleinertem vulkanisiertem Kautschuk erhitzt man dabei auf eine Temperatur von 250°C, hält innerhalb von 3,5 Stunden, setzt den Weichmacher zu und kühlt das Gemisch auf eine Temperatur von 55°C ab, wonach man das Vernetzungsmittel zugibt.

Die Prüfergebnisse sind in der nachstehenden Tabelle angegeben.

Beispiel 16

Die Zusammensetzung der Bitumen-Kautschuk-Mischung, ihre Herstellung und Prüfungen ähneln denen in Beispiel 9. Das Gemisch aus Erdölbitumen und zerkleinertem vulkanisiertem Kautschuk erhitzt man dabei auf eine Temperatur von 250°C, hält innerhalb von 3,5 Stunden, setzt den Weichmacher zu und kühlt das Gemisch auf eine Temperatur von 40°C ab, wonach man das Vernetzungsmittel zugibt.

Die Prüfergebnisse sind in der nachstehenden Tabelle angegeben.

Industrielle Anwendbarkeit

Die beanspruchte Erfindung kann bei der Herstellung von Baustoffen und im Bauwesen zur Hermetisierung und Wasserabdichtung von Bauwerken Verwendung finden.

Tabelle

| Bei-spi-ele | Relative Grenz-dehnung bei plus 20°C in % | Haftfest-igkeit an Beton bei 0°C in MPa | Erwei-chungs-tempe-ratur in °C | Elas-tizi-tät bei plus 30°C in % | Zugfest-igkeit bei 0°C in MPa |
|---|---|---|---|---|---|
| I | 640 | 0,97 | I23 | 52 | I,04 |
| 2 | 760 | I,09 | 92 | 57 | 0,92 |
| 3 | 660 | 0,84 | 92 | 49 | 0,96 |
| 4 | 880 | I,07 | 97 | 64 | 0,98 |
| 5 | 880 | 0,97 | 97 | 68 | 0,94 |
| 6 | 860 | 0,96 | 96 | 66 | 0,9I |
| 7 | 5I0 | I,02 | I27 | 53 | I,00 |
| 8 | 800 | 0,82 | 88 | 46 | 0,9I |
| 9 | 480 | 0,82 | I02 | 48 | 0,68 |
| I0 | 500 | 0,80 | 90 | 49 | 0,76 |
| II | 530 | 0,83 | 87 | 54 | 0,76 |
| I2 | 470 | 0,8I | 88 | 48 | 0,72 |
| I3 | 4I0 | 0,68 | 94 | 40 | 0,63 |
| I4 | 880 | I,00 | 98 | 67 | 0,93 |
| I5 | 900 | I,02 | 96 | 65 | 0,96 |
| I6 | 920 | I,08 | 95 | 63 | 0,97 |
| Nach Proto-typ | I05 | 0,II | 8I | 23 | 0,4 |

PATENTANSPRÜCHE

1. Bitumen-Kautschuk-Mischung, welche aus Erdölbitumen, zerkleinertem vulkanisiertem Kautschuk, dessen Teilchengrösse weniger als 5 mm beträgt, Weichmacher und Vernetzungsmittel besteht, d a - durch gekennzeichnet, dass sie als Weichmacher ein Nebenprodukt, welches bei der Herstellung von Zellstoff aus Nadelholz nach dem Sulfatverfahren durch Absetzen der Kochlauge anfällt und 45 bis 55% Gemisch aus Natriumsalzen von Harz- und Fettsäuren enthält, oder Verseifungsrückstand, welcher durch Vakuumrektifikation von Tallöl nach der Entfernung des Tallkolophoniums und der Fettsäurefraktion anfällt und 20 bis 35% Gemisch aus Natriumsalzen von Harz- und Fettsäuren enthält, und als Vernetzungsmittel ein Nebenprodukt, welches bei der Herstellung von Kaprolaktam aus Benzol auf der Stufe der Gewinnung der Adipinsäure aus Zykloheksanon anfällt und 11 bis 22% Natriumsalz der Adipinsäure enthält, bei folgendem Mischungsverhältnis von Ausgangskomponenten in Masse% enthält:

| | |
|---|---|
| Erdölbitumen | 30,0 bis 89 |
| zerkleinerter vulkanisierter Kautschuk, dessen Teilchengrösse weniger als 5 mm beträgt | 10,0 bis 60 |
| Nebenprodukt, welches bei der Herstellung von Zellstoff aus Nadelholz nach dem Sulfatverfahren durch Absetzen der Kochlauge anfällt und 45 bis 55% Gemisch aus Natriumsalzen von Harz- und Fettsäuren enthält, oder Verseifungsrückstand, welcher durch Vakuum- | |

rektifikation von Tallöl nach
der Entfernung des Tallkolophoniums und der Fettsäurefraktion
anfällt und 20 bis 35, Gemisch
aus Natriumsalzen von Harz-
und Fettsäuren enthält                    0,5 bis 5
Nebenprodukt, welches bei der
Herstellung von Kaprolaktam
aus Benzol auf der Stufe der
Gewinnung der Adipinsäure aus
Zyklohexanon anfällt und 11
bis 22, Natriumsalz der
Adipinsäure enthält                       0,5 bis 5

2. Verfahren zur Herstellung der Bitumen-Kautschuk-Mischung nach Anspruch 1, welches Vermischen
und Erhitzen von Erdölbitumen, zerkleinertem vulkanisiertem Kautschuk, dessen Teilchengrösse weniger als
5 mm beträgt, und Weichmacher auf eine 175°C übersteigende Temperatur, anschliessendes Zusetzen eines Vernetzungsmittels zum erhaltenen Gemisch und Herstellung des Endprodukts vorsieht, d a d u r c h   g e -
k e n n z e i c h n e t, dass man Erdölbitumen und
zerkleinerten vulkanisierten Kautschuk, dessen Teilchengrössen weniger als 5 mm beträgt, zunächst vermischt, das Gemisch erhitzt und bei einer zwischen
220 und 250°C liegenden Temperatur hält, wonach man dem
gewonnenen Gemisch Weichmacher und Vernetzungsmittel
zugibt.

3. Verfahren nach Anspruch 2, d a d u r c h
g e k e n n z e i c h n e t, dass das Gemisch aus Erdölbitumen und zerkleinertem vulkanisiertem Kautschuk,
dessen Teilchengrösse weniger als 5 mm beträgt, bei
einer zwischen 220 und 250°C innerhalb von 1,5 bis
3,5 Stunden gehalten wird.

4. Verfahren nach Anspruch 2 bis 3, d a d u r c h  g e k e n n z e i c h n e t, dass das Vernetzungsmittel dem angegebenen Gemisch nach der Zugabe des Weichmachers und nach der Abkühlung desselben auf eine Temperatur von 40 bis 70°C zugegeben wird.

5. Verfahren nach Anspruch 2 bis 4, d a d u r c h  g e k e n n z e i c h n e t, dass als Weichmacher Nebenprodukt, welches bei der Herstellung von Zellstoff aus Nadelholz nach dem Sulfatverfahren durch Absetzen der Kochlauge anfällt und 45 bis 55; Gemisch aus Natriumsalzen von Harz- und Fettsäuren enthält, oder Verseifungsrückstand, welcher durch Vakuumrektifikation von Tallöl nach der Entfernung des Tallkolophoniums und der Fettsäurefraktion anfällt und 20 bis 35, Gemisch aus Natriumsalzen von Harz- und Fettsäuren enthält, dient.

6. Verfahren nach Anspruch 2 bis 5, d a d u r c h  g e k e n n z e i c h n e t, dass als Vernetzungsmittem ein Nebenprodukt dient, welches bei der Herstellung von Kaprolaktam aus Benzol auf der Stufe der Gewinnung der Adipinsäure aus Zyklohexanon anfällt und 11 bis 22' Natriumsalz der Adipinsäure enthält.